# EUROPEAN PATENT SPECIFICATION

(11) **EP 0 397 118 B1**
(45) Date of publication and mention of the grant of the patent: **27.12.1995**
(21) Application number: 90108662.9
(22) Date of filing: 08.05.1990
(51) Int. Cl.: G11B 19/20, G11B 5/54, G11B 21/08, G11B 19/04

(54) **Disc control apparatus and operating method thereof**
Plattensteuergerät und dessen Betriebsverfahren
Appareil de contrôle de disque et sa méthode de fonctionnement

(30) Priority: 09.05.1989 JP 115603/89
(43) Date of publication of application: 14.11.1990
(73) Proprietor: SANYO ELECTRIC CO., LTD., Moriguchi-shi, Osaka (JP)
(72) Inventor: Iizuka, Hajime, Gunma-ken (JP); Uchida, Zenjiro, Tochigi-ken (JP)
(74) Representative: Glawe, Delfs, Moll & Partner

(56) References cited:
- EP-A- 0 224 378
- WO-A-86/02480
- US-A- 4 727 443
- US-A- 4 751 595
- US-A- 4 758 914
- US-A- 4 786 995
- PATENT ABSTRACTS OF JAPAN vol. 10, no. 19 (P-423)(2076) 24 January 1986,& JP-A-60 171682 (NIPPON DENKI K.K.) 5 September 1985,

## Description

### Disc Control Apparatus and Operating Method Thereof

### BACKGROUND OF THE INVENTION

### Field of the Invention

The present invention relates generally to disc control apparatuses, and more particularly, to a disc control apparatus for a memory disc device for use as an external memory device of a computer. The present invention is particularly applicable to an external memory device of a portable computer.

### Description of the Background Art

Conventionally, a flexible disc apparatus or a hard disc apparatus such as a magnetic disc apparatus is broadly used in general as an external memory device for use in a computer. For example, a personal computer is also provided with a hard disc apparatus having a larger storage capacity in addition to a flexible disc apparatus. The hard disc apparatus generally includes a disc controller. In response to a request from a host computer for access to a disc, the disc controller causes a head for writing/reading to shift to a cylinder of a hard disc, whereby a data signal is written and read in and from a magnetic medium through the head. After the reading or writing, the head is located over the cylinder which is written or read, and then the head is moved to other cylinder to be accessed in response to a subsequent request for access.

A hard disc generally comprises a data area in which data signals are written and an non-data area called "shipping zone" in which no data signal is written. When a personal computer or a hard disc apparatus is shipped, a writing and reading head is moved in the shipping zone of the hard disc, so that lost of the data written in the date area of the magnetic disc can be prevented. Namely, it is possible to prevent the head from touching the magnetic medium in the data area because of vibration caused when the apparatus is being carried, thereby preventing the data written in the data area from being damaged.

More specifically, the power is supplied, when the head exists over the magnetic medium by a predetermined distance without contacting the magnetic medium. However, when no power is supplied, the head comes into contact, at its location, with the magnetic medium in the data area. When the personal computer or the hard disc apparatus is carried in this state of contact, the head physically damages the magnetic medium in the data area because of the vibration caused during the carriage of the apparatus. Accordingly, it sometimes happens that the data written in the magnetic medium is lost. Particularly, as a portable personal computer apparatus such as a lap-top type personal computer is widely used in recent years, the carriage of the apparatus is often accompanied by such loss or damage of written data as described above.

US-A-4,758,914 discloses a disc protection system according to the pre-characterizing part of claim 1 wherein a head seek commanding section issues a command to a HD controller, which command causes head to seek a CSS zone (non-data area), when a power breaking request signal is issued, and a power breaking commanding section issues a power breaking signal to a power supply after completion of the seek operation.

By using such a system there may arise a problem, when the power supply switch is onced turned off, and then it is turned on again before generation of the end signal, indicating the end of the shift of said head. In this case any following command, e.g. to access the disc will be queued until the head has reached the parking area. Thus access to the disc can first be started after the head has moved to the parking area.

On the other side JP-A-60171682 dicloses a retract system for a disc head wherein a retract signal is generated in response to turning-off of power supply switch, and a head is moved to a CSSl zone in response to the retract signal. A delay circuit "d" causes a relay drive signal to attain "L" level after a predetermined delay time from turning-off of power supply. As a result, a relay is opened to turn off the power supply after the head has moved to the CSS zone. In other words, no termination signal is used while sufficient time period to return to the CSS zone is set as the delay time.

Also by using said system there may arrise a problem, when the power supply switches onced turned off, and then it is turned on again before lapse of the delay time. This may cause the so called "hang up state", leading to errors in the operation.

### SUMMARY OF THE INVENTION

The object of the present invention is, to provide a disc control apparatus which overcomes the above shortcomings and enables a sure shifting operation of the head, wherein the request for power cut-off can be cancelled before the head has reached a parking area.

This object is achieved by a disc control apparatus according to claim 1 and a method according to claim 8. The further claims are related to different advantageous aspects of the present invention.

An aspect of the present invention is to prevent loss or damage of data written in a disc of a disc control apparatus which is caused by the vibration of the apparatus.

Another aspect of the present invention is to prevent a head for writing or reading from remaining over a data storing area of a disc of a disc control apparatus after a power supply is cut off.

A further aspect of the present invention is to prevent loss or damage of data written in a disc of a portable disc control apparatus, which is caused by the vibration of the apparatus.

In the operation, after the head is moved to the position above the non-data area of the disc by the head shift controlling circuit, the cutting-off circuit cuts off the supply of power. Accordingly, even if vibration is applied to this apparatus after the cut-off of the power supply, the data written in the data area of the disc is not neither lost nor damaged.

According to another aspect of the present invention, an operating method of the disc control apparatus according to the present invention comprises the steps of requesting cut-off of the power supply, shifting the head to the position above the non-data area of the disc in response to the request of cut-off of the power supply, generating an end signal indicating the end of the shift of the head, and cutting off supply of power in response to the end signal.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of a control device of a hard disc drive apparatus according to one embodiment of the present invention.

Fig. 2 is a block diagram of the hard disc drive apparatus shown in Fig. 1.

Fig. 3 is a circuit diagram of a control circuit 12 shown in Fig. 1.

Figs. 4 and 5 are timing charts explaining operations of the control circuit shown in Fig. 1.

### DESCRIPTION OF THE PREFERRED EMBODIMENTS

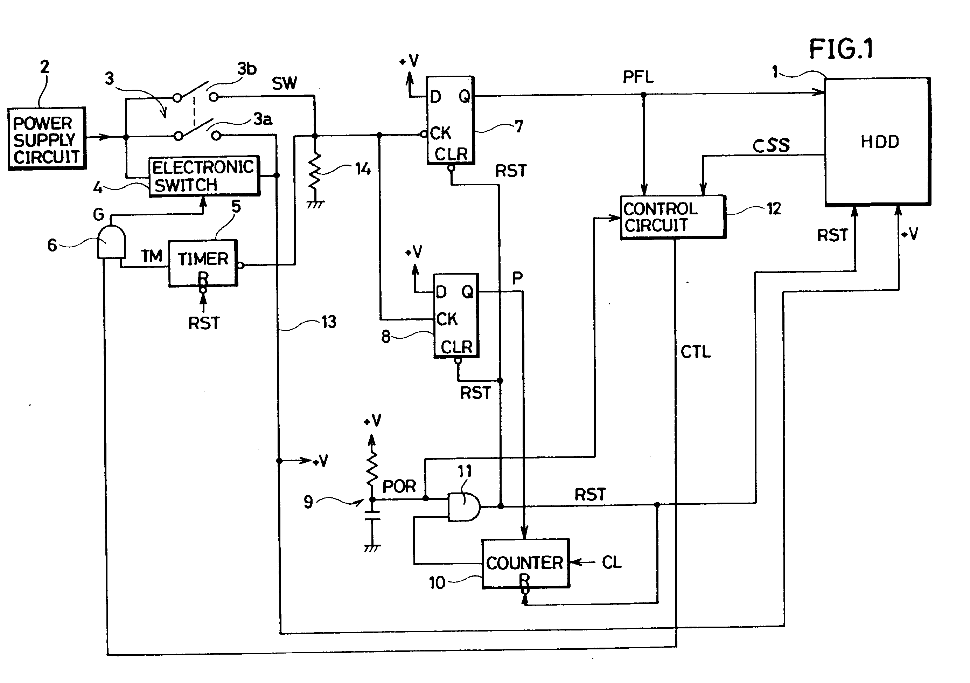

Referring to Fig. 1, a control device for a hard disc drive (referred to as "HDD" hereinafter) apparatus 1 comprises a power supply circuit 2, a power supply switch 3 connected to an output of the power supply circuit 2 and including two ganged switches 3a and 3b, an electronic switch 4 connected in parallel with the switch 3a, a timer 5 operating in response to a turning-off of the power supply switch 3, an AND gate 6, a latch circuit 7 and a detection circuit 8 each structured by a D-flip-flop, a power-on reset circuit 9, a counter for counting a predetermined clock pulse CL, an AND gate 11 connected to outputs of the power-on reset circuit 9 and the counter 10, and a control circuit 12 for generating a control signal CTR in response to an output signal PFL from the latch circuit 7, an output signal CSS from HDD apparatus 1 and an output signal POR from power-on reset circuit 9.

Power Supply Circuit 2 supplies power to each circuit provided in this control device. Power supply switch 3 can be manually operated by an operator. Electronic switch 4 is comprised of, for example, a FET or the like, and has an output terminal connected to a power supply line 13. An output terminal of switch 3b is grounded through a resistor 14. Latch circuit 7 has a terminal D connected to receive a power supply voltage +V and a terminal CK connected to a common connection node between switch 3b and resistor 14. Accordingly, latch circuit 7 latches a signal of a high level applied to the terminal D in response to a fall of an output signal SW of switch 3b. Detection circuit 8 has a terminal D connected to receive the power supply voltage +V and a terminal CK connected to receive the output signal SW of switch 3b. Accordingly, detection circuit 8 latches a signal of the high level applied to the terminal D, in response to a rise of the signal SW. Power-on reset circuit 9 comprises a resistor R and a capacitor C.

An output RST of AND gate 11 is connected to each terminal CLR of the latch circuit 7 and the detection circuit 8, and to each reset terminal of HDD apparatus 1, timer 5 and counter 10. AND gate 6 is connected to receive the output signal CTL from control circuit 12 and an output signal TM from timer 5. Electronic switch 4 has a control terminal connected to receive an output signal G from NAND gate 6.

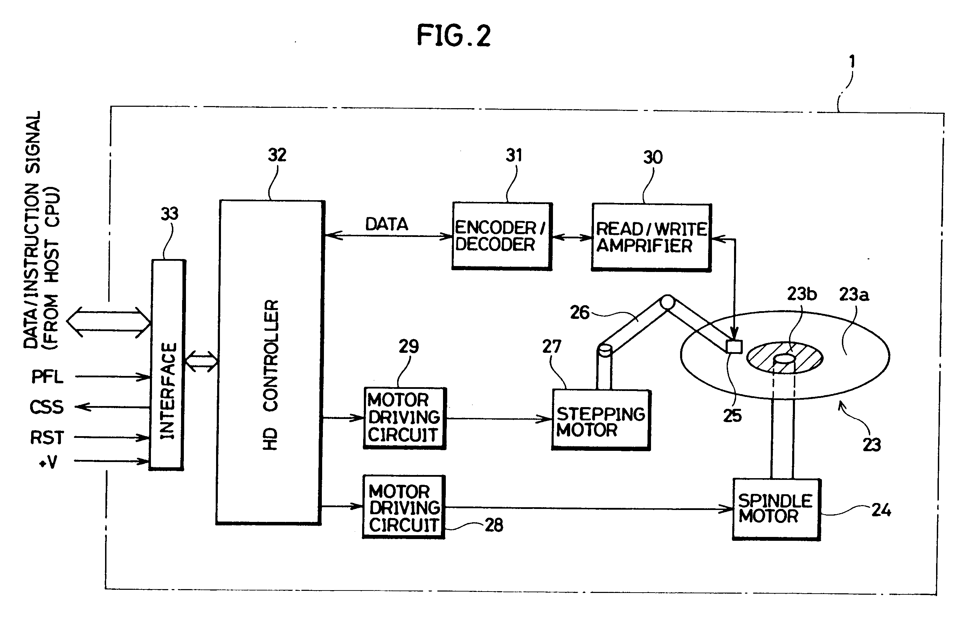

Fig. 2 shows HDD apparatus 1 in Fig. 1. Referring to Fig. 2, the HDD apparatus 1 comprises a hard disc 23 in which a data signal is written, a spindle motor 24 for driving the hard disc 23, a motor driving circuit 28 for driving the motor 24, a head for writing and reading, an arm 26 for shifting the head 25, a stepping motor 27 for driving the arm 26, a motor driving circuit 29 for driving the motor 27, reading/writing amplifier 30 for amplifying a data signal to be read or to be written through head 25, an encoder/decoder 31 for encoding or decoding the read data and data to be written, a HD controller 32 for controlling the motor driving circuits 28 and 29 and the encoder/decoder 31, and an interface circuit 33. Interface circuit 33 is connected to receive a data/instruction signal from a host CPU (not shown). In addition to this, while the interface circuit 33 receives the signals PFL and RST and the power supply voltage +V from the control device shown in Fig. 1, it generates the signal CSS indicating that head 25 is shifted to a shipping zone 23b. It is pointed out that hard disc 23 includes data area 23a in which the data signal is to be written and shipping zone 23b as described in the foregoing.

In the operation, while the power supply voltage +V is supplied, motor driving circuit 28 keeps driving spindle motor 24. Accordingly, the hard disc 23 keeps rotating. In an enable state, controller 32 enters an accessible state in response to the signal PFL of the low level. Namely, controller 32 causes motor 27 to shift the head 25 in response to the instruction signal from the host CPU, whereby a designated cylinder in data area 23a is accessed. The data signal is transmitted through encoder/decoder 31 and reading/writing amplifier 30. On the contrary, in a disable state, this HDD apparatus 1 enters an non-accessible state in response to the signal PFL of a high level. More specifically, in this state, the access of the head 25 to magnetic disc 23 is prohibited, so that no writing/reading of the data signal is performed.

What is especially to be noted in the HDD apparatus 1 is the operation when the applied signal PFL rises. Namely, controller 32 drives stepping motor 27 such that head 25 shifts to a position above the shipping zone in response to the rise of the signal PFL. The position of the head 25 is determined by the number of pulses supplied from the controller 32. Application of pulses to stepping motor 27 by motor driving circuit 29 causes head 25 to shift to a position above shipping zone 23b. When head 25 is shipped to shipping zone 23b, controller 32 generates the signal CSS indicating the end of the shift of head 25. The signal CSS is applied to the control circuit 12 shown in Fig. 1 through interface circuit 33.

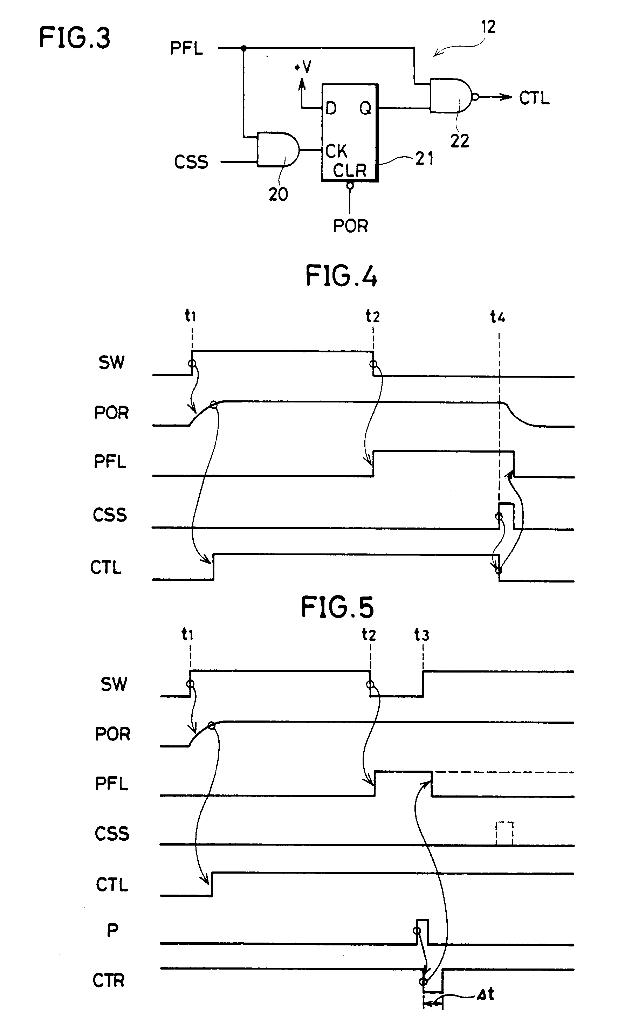

Fig. 3 shows one example of the control circuit 12 shown in Fig. 1. Referring to Fig. 3, the control circuit 12 comprises an AND gate 20, a D type flip-flop 21 and an NAND gate 22. Flip-flop 21 has a reset input CLR connected to receive a power-on reset signal POR. A data input D of flip-flop 21 is connected to receive the power supply voltage +V. A clock input CK of flip-flop 21 is connected to an output of AND gate 20.

In the operation, when the power supply voltage +V rises, flip-flop 21 is reset to output the signal CTL of. the high level. When the signals PFL and CSS of the high level are applied, flip-flop 21 accepts and holds the power supply voltage +V applied to the input terminal D, that is, the signal of the high level, and applies the output signal of the high level to NAND gate 22. As a result, the signal CTL falls.

The timing chart of Fig. 4 shows a basic operation of the control circuit shown in Fig.1, and Fig. 5 shows an operation when power supply switch 3 is again turned on immediately after being turned off. Referring to Figs. 1 through 5, the operation of the control circuit shown in Fig. 1 will be described in the following.

First, at a time point t1, when power supply switch 3 is turned on, the output signal SW of switch 3b rises. In addition to this, the power supply voltage +V is started to be supplied to power supply line 13 through switch 3a. In response to the supply of the power supply voltage +V, the output signal POR of power-on reset circuit 9 rises from the low level to the high level corresponding to a time constant, as shown in Fig. 4. Therefore, the reset signal RST of the AND gate 11 also changes from low level to high level so that the circuits 1, 5, 7 and 8 are reset in the low level period of the signal RST. Therefore, latch circuit 7 and detection circuit 8 outputs the signal PFL and the signal P of the low level. Accordingly, HDD apparatus 1 enters the accessible state.

In the control circuit 12 shown in Fig. 3, flip-flop 21 is similarly reset in response to the signal POR and outputs a signal of the low level. On this occasion, since the signal PFL is at the low level, an output signal CTL of AND gate 22 rises.

As a result of the turning-off of power supply switch 3, the signal SW falls from the high level to the low level. The timer 5 is activated in response to the fall of the signal SW, and outputs a signal TM of the low level after 15 seconds has passed after the activation. The timer 5 outputs the signal TM of the high level in other state. Accordingly, after the rise of the signal CTL, AND gate 6 outputs a signal G of the high level in response to the signals CTL and TM of the high level. As a result, electronic switch 4 is turned off.

At a time point t2 power supply switch 3 is turned off. In response to the turning-off of switch 3b, the signal SW falls. Latch circuit 7 outputs the signal PFL of the high level in response to the fall of the signal SW. The signal PFL of the high level is applied to HDD apparatus 1. Accordingly, HDD apparatus 1 enters an access-prohibited state.

In the HDD apparatus 1 shown in Fig. 2, controller 32 controls motor driving circuit 29 such that head 25 is shifted in shipping zone 23b in response to the rise of the signal PFL. After the pulse required to shift the head 25 is applied from motor driving circuit 29 to stepping motor 27, controller 32 outputs the signal CSS indicating the end of the shift of head 2 (time point t4).

In the control circuit 12 shown in Fig. 3, AND gate 20 outputs a high level signal in response to the rise of the signal CSS. Flip-flop 21 outputs a high level signal in response to the rise of the output signal from AND gate 20. Accordingly, AND gate 22 causes the output signal CTL to fall. The AND gate 6 shown in Fig. 1 outputs the signal G of the low level in response to the signal CTR of the low level, so that electronic switch 4 is turned off.

Namely, even after power supply switch 3 is turned off, electronic switch 4 remains in the on state until head 25 is shifted in shipping zone 23b. Accordingly, head 25 is prevented from remaining in the position above data area 23a even after power supply switch 3 is turned off. As a result, even if the hard disc apparatus is carried, none of the data written in the magnetic medium of data area 23a is lost due to the vibration caused during the carriage of the apparatus.

In general, for example, a maximum of about four seconds is required for shifting the head 25 existing in the data area 23a into shipping zone 23b. This required time period varies depending on the location of head 25 in data area 23a. Accordingly, in case the circuit shown in Fig. 1 is used, a maximum of about four seconds is required from a rise to a fall of the signal PFL as shown in Fig. 4. When the signal PFL is kept at a high level, the access to HDD apparatus 1, that is, writing and reading is prohibited as described above. Accordingly, even if power supply switch 3 is turned on again in this time period, it is not possible to access HDD apparatus 1. Such state is called "hang-up state". In order to avoid such inconvenience, the circuit shown in Fig. 1 is improved as follows.

Referring to Fig. 5, it is assumed that the power-supply switch 3 is turned on at the time point t2, and after a lapse of a short time period, the switch 3 is again turned on at a time period t3. While the power supply switch 3 is turned off from the time point t2 to t3, power supply circuit 2 keeps supplying the power, because the electronic switch 4 remains in the on state as described above. Accordingly, power-on reset circuit 9 keeps outputting the signal POR of the high level, so that latch circuit 7 can not be reset. This means that the signal PFL is continuously kept at the high level. In order to cause the signal PFL to attain the low level, the following operation will be executed.

Detection circuit 8 outputs the signal P of the high level in response to the rise of the signal SW at the time point t3. Counter 10 is activated in response to the rise of the signal P. Counter 10 counts a reference clock pulse CL from a clock generator (not shown) and outputs the signal CTR attaining a low level for a predetermined time length
Δt. The time length Δt is set, for example, to 150 mm sec. AND gate 11 outputs the signal RST of the low level in response to the fall of the signal CTR. As a result, latch circuit 7 and detection circuit 8 are reset, whereby each of the output signals PFL and P falls. After the fall of the signal PFL, HDD apparatus 1 becomes accessible. Namely, it is possible to prevent the computer system from entering the hang-up state.

In the circuit shown in Fig. 1, as described above, after the turning-off of power supply switch 3 by electronic switch 4 the power is kept supplied. Power supply by the electronic switch 4 is finished in response to the rise of the signal CSS outputted from the HDD apparatus 1. This means that the power supply can not be cut off in case a high level signal CSS is not outputted for some reasons. In order to avoid such inconvenience, timer 5 is provided. Timer 5 ordinarily outputs a high level signal TM. Timer 5 outputs the signal TM of the low level after 15 seconds has passed after the turning-off of power supply switch 3. Accordingly, the output signal G of AND gate 6 falls, so that electronic switch 4 is forcibly turned off. As a result, even in case the signal CSS of the high level is not generated from HDD apparatus 1, after 15 seconds has passed after the turning-off of power supply switch 3, no power is supplied with certainty. Since the signal RST is applied to timer 5 as a reset signal, timer 5 does not output the signal TM of the low level when counter 10 outputs the signal CTR.

## Claims

1. A disc control apparatus for a disc unit including
head means (25) for writing or reading a data signal stored on a disc (23),
said disc (23) having a data area (23a) in which the data is to be written and a parking area (23b) for said head means (25),
said disc control apparatus comprises:
means (3) for selectively generating a request for cut-off or for connecting a power supply (2) to said disc unit;
head shift controlling means (26, 27, 29, 32) responsive to the request (SW) for cut-off of the power supply for shifting said head means (25) to a position above said parking area (23b) of said disc (23);
end signal generating means (5, 6, 12) for generating an end signal (G) indicating the end of the shift of said head means (25); and
cutting off means (4) connected to the power supply and responsive to said end signal (G) for cutting off the power supply (2);
**characterized** in that, said disc control apparatus futher comprises
a first device (7) providing an access enable/disable signal (PFL) in response to the request (SW), so as to enable the access to said hard disc unit during normal operation, and to disable the access to said hard disc unit during the shift of said head means (25);
a second device (8) providing a reset signal (P) upon a request of connecting the power supply (2) occuring before the end signal (G) has been generated; and
said reset signal (P) being applied to reset said first device (7), whereby the access enable signal is again produced.

2. Disc control apparatus according to claim 1 wherein said first device (7) comprises:
a request detecting means (7) for detecting the request for cut-off of the power supply by said cutting off means (4), and
disabling means (32) responsive to said request detecting means for disabling access to said disc (23) by said head means (25).

3. The disc control apparatus according to claim 2, wherein said second device (8) comprises:
release detecting means (8) for detecting a release of the request for the cut-off of the power supply by said cutting off means (4).

4. The disc control apparatus according to claim 1, 2 or 3 further comprising time length detecting means (5) responsive to the request for cut-off of the power supply by said cutting off means (4) for detecting a lapse of a predetermined time length, wherein said end signal (G) is generated after lapse of said predetermined time length.

5. The disc control apparatus according claim 2, wherein said cutting off means (4) cuts off the power supply by said power supplying means (2) in response to an output signal from said request detecting means (7) and an output from a control circuit (12) indicating the termination of the head shift operation.

6. The disc control apparatus according to claim 4, wherein said cutting off means (4) cuts off the power supply by said power supplying means (2) in response to either the lapse of said predetermined time or said termination signal.

7. The disc control apparatus according to claim 1 wherein said parking area includes a predetermined shipping zone (23b) in a said disc (23).

8. A method for operating a disc control apparatus having a disc (23) for storing a data signal, said disc (23) including a data area (23a) in which the data signal is to be written and a parking area (23b) in which no data signal is written, the apparatus comprising power supplying means (2) and head means (25) for writing or reading the data signal in or from the data area of said disc, said method comprising the steps:
requesting for the cut-off of the power supply,
detecting said request for cut-off of the power supply,
shifting said head means (25) to a position above said parking area (23b) of said disc (23) in response to the request for the cut-off of the power supply,
wherein said step of shifting said comprises a step of shifting said head means into said parking area (23b) of said disc in response to the detection of said cutting off request,
generating an end signal (G) indicating the end of the shift of said head means, and
cutting off the supply of power by said power supplying means (2) in response to said end signal (G),
said method being **characterized** by further comprising the steps of
disabling the access to said disc (23) by said head means (25) in response to the detection of said cutting off request,
detecting release of the request for cut-off of the power supply by said cutting off request, and
resetting a detection state in said step of detection the cutting off request in response to said detection of the release,
enabling the access to said disc by said head means in response to said detection of the release.

9. A method of operating the disc control apparatus according to claim 7, further comprising:
detecting a lapse of a predetermined time length in response to a request for cut-off the power supply,
cutting off the power supply in response to said lapse of the predetermined time length.

## Patentansprüche

1. Plattensteuerungsgerät für eine Platteneinheit mit: einem Kopfmittel (25) zum Schreiben oder Lesen von Datensignalen, die auf einer Platte (23) gespeichert sind, wobei die Platte (23) einen Datenbereich (23a), in den die Daten zu schreiben sind, und einen Parkbereich (23b) für das Kopfmittel (25) hat,
wobei das Plattensteuerungsgerät umfaßt:
ein Mittel (3) zur wahlweisen Erzeugung einer Anforderung zur Unterbrechung oder zum Verbinden der Energieversorgung (2) mit der Platteneinheit;
ein Kopfverschiebe-Steuermittel (26, 27, 29, 32), um in Abhängigkeit von der Anforderung (SW) zur Unterbrechung der Energieversorgung das Kopfmittel (25) in eine Stellung oberhalb des Parkbereichs (23b) der Platte (23) zu verschieben;
ein Endsignal-Erzeugungsmittel (5, 6, 12) zur Erzeugung eines Endsignals (G), welches das Ende des Verschiebevorgangs des Kopfmittels (25) anzeigt; und
einem Unterbrechermittel (24), das mit der Energieversorgung verbunden ist, um in Abhängigkeit von dem Endsignal (G) die Energieversorgung (2) zu unterbrechen;
dadurch gekennzeichnet, daß das Plattensteuerungsgerät außerdem umfaßt:
eine erste Vorrichtung (7), die ein Enable-/Disable-Signal (PFL) in Abhängigkeit von der Anforderung (SW) erzeugt, um so den Zugang auf die Festplatteneinheit während des normalen Arbeitsvorgangs zu ermöglichen und den Zugang auf die Festplatteneinheit während des Verschiebevorgangs des Kopfmittels (25) zu verhindern;
eine zweite Vorrichtung (8), die ein Rücksetzsignal (P) erzeugt, wenn eine Anforderung zum Verbinden der Energieversorgung (2) auftritt, bevor das Endsignal (G) erzeugt wurde, und
wobei das Rücksetzsignal (P) zum Rücksetzen an die erste Vorrichtung (7) angelegt wird, wodurch das Zugriffs-Enable-Signal erneut erzeugt wird.

2. Plattensteuerungsgerät nach Anspruch 1, bei dem die erste Vorrichtung (7) umfaßt:
ein Anforderungsdetektormittel (7) zum Erkennen der Anforderung zum Unterbrechen der Energieversorgung durch das Unterbrechermittel (4) und
ein Disable-Mittel (32), das in Abhängigkeit von dem Anforderungsdetektormittel den Zugriff auf die Platte (23) durch das Kopfmittel (25) verhindert.

3. Plattensteuerungsgerät nach Anspruch 2, bei dem die zweite Vorrichtung (8) umfaßt:
ein Freigabedetektormittel (8), um eine Freigabe der Anforderung zum Unterbrechen der Energieversorgung durch das Unterbrechermittel (4) zu erkennen.

4. Plattensteuerungsgerät nach Anspruch 1, 2 oder 3, das außerdem ein Zeitlängendetektormittel (5) umfaßt, das in Abhängigkeit von der Anforderung zum Unterbrechen der Energieversorgung durch das Unterbrechermittel (4) den Ablauf einer vorgegebenen Zeitspanne erkennt, wobei das Endsignal (G) nach Ablauf der vorgegebenen Zeitspanne erzeugt wird.

5. Plattensteuerungsgerät nach Anspruch 2, bei dem das Unterbrechermittel (4) die Energieversorgung durch das Energieversorgungsmittel (2) in Abhängigkeit von einem Ausgabesignal des Anforderungsdetektormittels (7) und einer das Ende des Kopfverschiebearbeitsvorgangs anzeigenden Ausgabe einer Steuerschaltung (12) unterbricht.

6. Plattensteuerungsgerät nach Anspruch 4, bei dem das Unterbrechermittel (4) die Energieversorgung durch das Energieversorgungsmittel (2) entweder in Abhängigkeit von dem Ablauf der vorgegebenen Zeitspanne oder dem Endsignal unterbricht.

7. Plattensteuerungsgerät nach Anspruch 1, in dem der Parkbereich eine vorgegebene Aufsetzzone (23b) in einer Platte (23) enthält.

8. Verfahren zum Betrieb eines Plattensteuerungsgeräts mit einer Platte (23) zum Speichern von Datensignalen, wobei die Platte (23) einen Datenbereich (23a), in dem Datensignale geschrieben werden, und einen Parkbereich (23b), in welchem keine Datensignale geschrieben werden, enthält, wobei die Vorrichtung ein Energieversorgungsmittel (2) und ein Kopfmittel (25) zum Schreiben oder Lesen der Datensignale in dem Datenbereich der Platte umfaßt und wobei das Verfahren die Schritte umfaßt:
- Anforderung der Unterbrechung der Energieversorgung,
- Erkennen der Anforderung zur Unterbrechung der Energieversorgung,
- Verschieben des Kopfmittels (25) in eine Stellung oberhalb des Parkbereichs (23b) der Platte (23) in Abhängigkeit von der Anforderung zur Unterbrechung der Energieversorgung,
wobei der Schritt zum Verschieben umfaßt:
- einen Schritt zum Verschieben des Kopfmittels in den Parkbereich (23b) der Platte in Abhängigkeit von der Detektion der Unterbrechungsanforderung,
- Erzeugung eines Endsignals (G), das das Ende des Verschiebevorgangs des Kopfmittels anzeigt, und
- Unterbrechen der Energieversorgung durch das Energieversorgungsmittel (2) in Abhängigkeit von dem Endsignal (G),
wobei das Verfahren dadurch gekennzeichnet ist, daß es außerdem die Schritte umfaßt:
- Verhindern des Zugriffs auf die Platte (23) durch das Kopfmittel (25) in Abhängigkeit der Detektion der Unterbrechungsanforderung,
- Erkennen einer Freigabe der Anforderung zur Unterbrechung der Energieversorgung durch die Unterbrechungsanforderung, und
- Rücksetzen eines Detektionszustandes in dem Schritt der Detektion der Unterbrechungsanforderung in Abhängigkeit von der Detektion der Freigabe,
- Freigabe des Zugriffs auf die Platte durch das Kopfmittel in Abhängigkeit von der Detektion der Freigabe.

9. Verfahren zum Betrieb eines Plattensteuerungsgeräts nach Anspruch 7, das außerdem umfaßt:
Detektion des Ablaufs einer vorgegebenen Zeitspanne in Abhängigkeit von der Anforderung zur Unterbrechung der Energieversorgung,
Unterbrechen der Energieversorgung in Abhängigkeit vom Ablauf einer vorgegebenen Zeitspanne.

## Revendications

1. Appareil de commande de disque destiné à une unité de disque comprenant
un moyen de tête (25) destiné à écrire ou lire un signal de données mémorisé sur un disque (23),
ledit disque (23) possédant une zone de données (23a) dans laquelle les données doivent être écrites et une zone de parcage (23d) destinée audit moyen de tête (25),
ledit appareil de commande de disque comprend :
un moyen (3) destiné à générer de façon sélective une demande pour couper ou pour connecter une alimentation électrique (2) à ladite unité de disque,
un moyen de commande de décalage de tête (26, 27, 29, 32) répondant à la demande (SW) de coupure de l'alimentation électrique pour décaler ledit moyen de tête (25) à une position située au-dessus de ladite zone de parcage (23b) dudit disque (23),
un moyen de génération de signal d'exécution (5, 6, 12) destiné à générer un signal de fin d'exécution (G) indiquant la fin du décalage dudit moyen de tête (25), et
un moyen de coupure (4) relié à l'alimentation électrique et répondant audit signal de fin d'exécution (G) afin de couper l'alimentation électrique (2),
caractérisé en ce que ledit appareil de commande de disque comprend en outre
un premier dispositif (7) procurant un signal d'accès autorisé/non autorisé (PFL) en réponse à la demande (SW) de façon à permettre l'accès à ladite unité de disque dur durant le fonctionnement normal et à interdire l'accès de ladite unité de disque dur durant le décalage dudit moyen de tête (25),
un second dispositif (8) procurant un signal de réinitialisation (P) après la demande de connexion de l'alimentation électrique (2) apparaissant avant que le signal de fin d'exécution (G) ait été généré, et
ledit signal de réinitialisation (P) étant appliqué de façon à réinitialiser ledit premier dispositif (7) par lequel le signal d'autorisation d'accès est à nouveau fourni.

2. Appareil de commande de disque selon la revendication 1, dans lequel ledit premier dispositif (7) comprend :
un moyen de détection de demande (7) destiné à détecter la demande de coupure de l'alimentation électrique par ledit moyen de coupure (4), et
un moyen d'interdiction (32) répondant audit moyen de détection de demande pour interdire l'accès dudit disque (23) par ledit moyen de tête (25).

3. Appareil de commande de disque selon la revendication 2, dans lequel ledit second dispositif (8) comprend :
un moyen de détection de libération (8) pour détecter une libération de la demande pour la coupure de l'alimentation électrique par ledit moyen de coupure (4).

4. Appareil de commande de disque selon les revendications 1, 2 ou 3, comprenant en outre un moyen de détection de durée (5) répondant à la demande pour la coupure de l'alimentation électrique par ledit moyen de coupure (4) destiné à détecter l'écoulement d'un temps prédéterminé, dans lequel ledit signal de fin d'exécution (G) est généré après ledit laps de temps prédéterminé.

5. Appareil de commande de disque selon la revendication 2, dans lequel ledit moyen de coupure (4) coupe l'alimentation électrique par ledit moyen d'alimentation électrique (2) en réponse à un signal de sortie issu dudit moyen de détection de demande (7) et à une sortie issue du circuit de commande (12) indiquant la fin de l'opération de décalage de la tête .

6. Appareil de commande de disque selon la revendication 4, dans lequel ledit moyen de coupure (4) coupe l'alimentation électrique par ledit moyen d'alimentation électrique (2) en réponse à, soit ladite période de temps prédéterminée, soit ledit signal de terminaison.

7. Appareil de commande de disque selon la revendication 1, dans lequel ladite zone de parcage comprend une zone de conditionnement prédéterminée (23b) sur ledit disque (23).

8. Procédé de fonctionnement d'un appareil de commande de disque possédant un disque (23) destiné à mémoriser un signal de données, ledit disque (23) comportant une zone de données (23a) sur laquelle le signal de données doit être écrit et une zone de parcage (23b) sur laquelle aucun signal de données n'est écrit, l'appareil comprenant un moyen d'alimentation électrique (2) et un moyen de tête (25) destiné à l'écriture ou la lecture des signaux de données vers ou à partir de la zone de données dudit disque, ledit procédé comprenant les étapes consistant à :
demander la coupure de l'alimentation électrique,
détecter ladite demande de coupure de l'alimentation électrique,
décaler ledit moyen de tête (25) à une position située au-dessus de ladite zone de parcage (23b) dudit disque (23) en réponse à la demande de coupure de l'alimentation électrique,
dans lequel ladite étape de décalage comprend une étape de décalage dudit moyen de tête vers ladite zone de parcage (23b) dudit disque en réponse à la détection de ladite demande de coupure,
générer un signal de fin d'exécution (G) indiquant la fin du décalage dudit moyen de tête, et
couper l'application de l'alimentation par ledit moyen d'alimentation électrique (2) en réponse audit signal de fin d'exécution (G),
ledit procédé étant caractérisé en outre par les étapes consistant à :
interdire l'accès audit disque (23) par ledit moyen de tête (25) en réponse à la détection de ladite demande de coupure,
détecter la libération de la demande pour la coupure de l'alimentation électrique par ladite demande de coupure, et
réinitialiser un état de détection à ladite étape de détection de la demande de coupure en réponse à ladite détection de libération, permettant l'accès audit disque par ledit moyen de tête en réponse à ladite détection de libération.

9. Procédé de fonctionnement de l'appareil de commande de disque selon la revendication 7 comprenant en outre :
la détection de l'écoulement d'un temps prédéterminé en réponse à une demande pour la coupure de l'alimentation électrique, et
la coupure de l'alimentation électrique en réponse à l'écoulement dudit intervalle de temps prédéterminé.
